# EUROPEAN PATENT SPECIFICATION

(11) **EP 3 109 545 B1**
(45) Date of publication and mention of the grant of the patent: **05.04.2023**
(21) Application number: 15768270.9
(22) Date of filing: 02.02.2015
(51) Int. Cl.: F22G 3/00, F01K 7/22, G21D 1/00, F22B 37/26

(54) **MOISTURE SEPARATOR/HEATER**
FEUCHTIGKEITSTRENNER/-ERHITZER
ÉLÉMENT CHAUFFANT/SÉPARATEUR D'HUMIDITÉ

(30) Priority: 27.03.2014 JP 2014065477
(43) Date of publication of application: 28.12.2016
(73) Proprietor: MITSUBISHI HEAVY INDUSTRIES, LTD., Tokyo, 100-8332 (JP)
(72) Inventor: FUJITA, Issaku, Yokohama-shi Kanagawa 220-8401 (JP); HIRAOKA, Satoshi, Yokohama-shi Kanagawa 220-8401 (JP)
(74) Representative: Cabinet Beau de Loménie
(86) International application number: PCT/JP2015/052861
(87) International publication number: WO 2015/146286

(56) References cited:
- JP-A- S 504 401
- JP-A- S5 457 001
- JP-A- 2000 310 401
- JP-A- 2002 122 303
- JP-A- 2007 205 170
- JP-A- 2009 062 902
- JP-A- 2011 127 869
- US-A- 3 593 500
- US-A- 3 712 272
- US-A- 3 750 371
- US-A- 4 717 400

## Description

### TECHNICAL FIELD

The present disclosure relates to a moisture separator heater to remove moisture from steam, particularly to a moisture separator heater applicable to e.g. a nuclear power-generating plant.

### BACKGROUND

An existing moisture separator heater applied to e.g. a nuclear power-generating plant is composed of, as disclosed in Patent Document 1, for example, a pair of manifolds which are provided on both sides in a width direction in a cylindrical casing extending in a horizontal direction and which extend in a longitudinal direction of the casing, a pair of separators which are disposed below the respective manifolds and which extend in the longitudinal direction of the casing and stand in the up-and-down direction, a steam collecting part formed between the pair of separators to collect steam having passed through the separators, and a heater disposed above the steam collecting part to heat the steam having passed through the separators.

With the above existing moisture separator heater, when wet steam from a high pressure turbine flows into the casing, the wet steam flows in the manifolds and then flows out through slits provided in the manifolds to the separator side. The wet steam having flowed out to the separator side has moisture removed when passing through the separators and joins at the steam collecting part. The steam having joined at the steam collecting part is heated when passing through the heater to have an increased temperature and is discharged from an outlet provided on the casing.

The heater includes a heating tube bundle having heating tubes extending in the axial direction of the casing and divided into a plurality of stages at different levels in the up-and-down direction. In the heating tube bundle, a space where the steam can flow is formed between adjacent heating tubes; however, if the pressure loss is large when the steam passes through the space, the cycle efficiency of the nuclear power-generating plant may decrease. Thus, it is necessary to reduce the pressure loss of the heater.

### Citation List

### Patent Document

Patent Document 1: Japanese Patent No. 3944227
US3593500 discloses a moisture separator heater according to the preamble of claim 1, US3750371 relates to an apparatus for separating liquids from wet steam, and US4717400 relates to a combined moisture separator and reheater.

### SUMMARY

### Technical Problem

If the width of the heating tube bundle is increased, the area of the steam flowing through the heating tube bundle can be increased, and the pressure loss can thereby be reduced. However, if the width of the heating tube bundle is increased, the space of the manifolds provided on both sides of the heating tube bundle are narrowed, and it becomes necessary to provide the separators at a position outside the casing beyond the inner surface of the casing, whereby installation of the separators becomes difficult. For this reason, it has been proposed to employ a larger casing or to increase the number of existing moisture separator heaters; however, such solutions lead to increase in the cost.

Further, as our country is in an area where earthquakes often occur, it is desired that a moisture separator heater have a structure which is less likely to be damaged in the event of an earthquake.

In view of the above problems, an object of the present invention is to provide a moisture separator heater which is capable of suppressing increase in the cost, which is less likely to be damaged in the event of an earthquake, and which is capable of reducing the pressure loss of the heater.

### Solution to Problem

A moisture separator heater according to the present invention is defined by claim 1 and comprises: a casing having a tubular shape, extending in a horizontal direction and having both end portions closed; a manifold chamber provided in the casing and configured so that steam flows in an axial direction of the casing; a separator provided in the casing and in a longitudinal direction of the casing along the manifold chamber and configured to remove moisture in the steam; and a heating tube bundle provided in the casing and on a downstream side of the steam flowing out of the separator. The heating tube bundle has a polygonal shape in a lateral view and has a longitudinal edge extending along the axial direction of the casing and a transverse edge extending in a vertical direction.

According to the above moisture separator heater, the longitudinal edge of the heating tube bundle extends in the axial direction of the casing, and the transverse edge of the heating tube extends in the vertical direction. Since the manifold chamber is configured so that steam flows in the axial direction of the casing and the separator is disposed in a longitudinal direction lateral to the casing along the manifold chamber, by permitting the steam flowing out of the separator to flow in from the transverse direction of the heating tube bundle, it becomes unnecessary to employ a larger casing and it is possible to reduce the pressure loss of the heating tube bundle. Further, since the casing extends in the horizontal direction, it is possible to lower the position of the center of gravity of the moisture separator heater compared with when the casing extends in the vertical direction, and thereby to suppress damage to the moisture separator heater in the event of an earthquake. Accordingly, it is possible to provide a moisture separator heater which is capable of suppressing increase in the cost, which is less likely to be damaged in the event of an earthquake, and which is capable of reducing the pressure loss of the heater.

The separator has a plate-like shape, extends in an up-and-down direction, and is disposed so as to face to a lateral side of the heating tube bundle.

In this case, since the separator has a plate-like shape, extends in the up-and-down direction, and is disposed so as to face to the lateral side of the heating tube bundle, it is possible to dispose the separator in the vicinity of the lateral side of the heating tube bundle. Accordingly, it becomes unnecessary to employ a larger casing and it is possible to suppress increase in the cost. Further, since it is possible to permit the steam flowing out of the separator to flow in from the lateral side of the heating tube bundle, it is possible to surely reduce the pressure loss of the heating tube bundle.

In an embodiment, the separator includes an inflow regulating part which covers a part of a lateral surface of the separator on a side into which the steam flows and which is configured to regulate an inflow amount of the steam into the separator.

In this case, since the separator includes the inflow regulating part which covers a part of the lateral surface of the separator on the side into which the steam flows to regulate the inflow amount of the steam into the separator, it is possible to supply the steam at a uniform flow rate to the separator side when there is a distribution of static pressure of the steam supplied from the manifold chamber to the separator side such that the static pressure becomes higher toward the back side in the longitudinal direction of the manifold chamber.

In an embodiment, the inflow regulating part includes a plurality of inflow regulating members extending in the up-and-down direction and covering the lateral surface of the separator, and a frame part to support the plurality of inflow regulating members. The plurality of inflow regulating members are arranged such that an interval between two adjacent inflow regulating members decreases from an upstream side toward a downstream side of the steam flowing along the axial direction of the casing.

In this case, since the plurality of inflow regulating members of the inflow regulating part are arranged such that the interval between two adjacent inflow regulating members decreases from the upstream side toward the downstream side of the steam flowing along the axial direction of the casing, it is possible to surely supply the steam at a uniform flow rate to the separator side when there is a distribution of static pressure of the steam supplied from the manifold chamber to the separator side such that the static pressure becomes higher toward the back side in the longitudinal direction of the manifold chamber. Further, since the inflow regulating part has a simple structure having the frame part and the inflow regulating members, it is possible to suppress increase in the cost.

In an embodiment, the inflow regulating member is provided with a moisture removing part capable of removing moisture in the steam flowing along the axial direction of the casing.

In this case, since the moisture removing part is disposed on the upstream side of the separator, it is possible to reduce a burden on the separator of work of removing moisture.

In an embodiment, the moisture removing part includes a moisture removing passage to allow the steam having flowed out of the manifold chamber to flow in a spiral manner.

In this case, when the steam flows into the moisture removing part, the steam flows in a spiral manner inside the moisture removing passage. When the steam moves in a spiral manner, it is possible to permit the centrifugal force to act on the moisture in the steam, and thereby to remove moisture.

### Advantageous Effects

According to some embodiments of the present invention, a moisture separator heater which is capable of suppressing increase in the cost, which is less likely to be damaged in the event of an earthquake, and which is capable of reducing the pressure loss of the heater can be provided.

### BRIEF DESCRIPTION OF DRAWINGS

FIG. 1 is schematic diagram illustrating a power generating plant having a moisture separator heater in a nuclear power-generating station.
FIG. 2(a) is a plan view diagram illustrating an example of an internal construction of a moisture separator heater; and FIG. 2(b) is a cross-sectional view of the moisture separator heater taken along arrows II-II of FIG. 2(a).
FIG. 3 is a plan view diagram illustrating an example of an internal construction of a moisture separator heater capable of introducing wet steam from both sides in the longitudinal direction.
FIG. 4 is a plan view diagram illustrating an example of an internal construction of a moisture separator heater capable of introducing wet steam from a central portion in the longitudinal direction.
FIG. 5 is a front view of the separator taken along arrow A of FIG. 2(a).
FIG. 6 is a cross-sectional view of the separator taken along arrows V-V of FIG. 5.
FIG. 7(a) is a perspective view of a moisture removing part according to an embodiment; and FIG. 7(b) is an explanatory diagram illustrating a function of the moisture removing part.

### DETAILED DESCRIPTION

Embodiments of the moisture separator heater according to the present invention will now be described in detail with reference to the accompanying drawings. In the following, a moisture separator heater installed in a power generating plant of a nuclear power-generating station will be described as an example. Firstly, in advance of description of the moisture separator heater, a power generating plant of a nuclear power-generating station having the moisture separator heater installed will be generally described. It is intended, however, that unless particularly specified, materials, shapes, relative positions and the like of components described in the embodiments shall be interpreted as illustrative only and not limitative of the scope of the present invention.

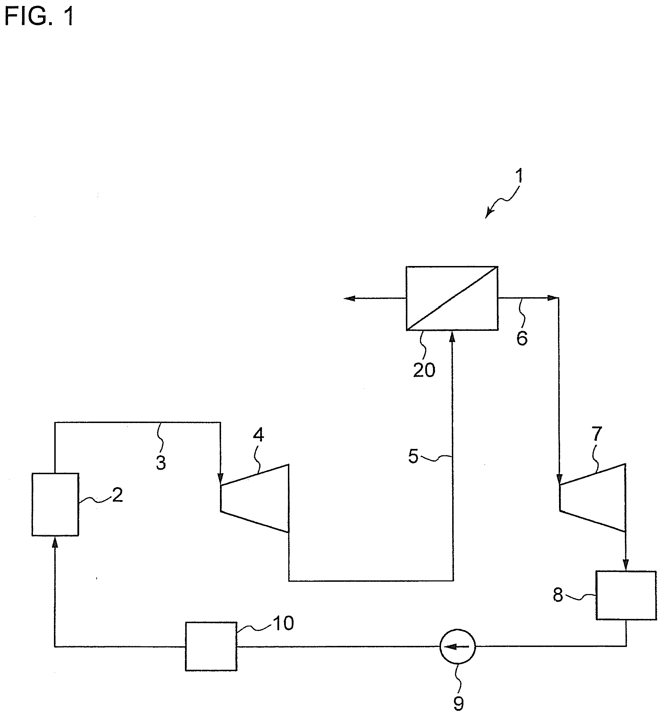

As illustrated in FIG. 1 (schematic diagram), in a power generating plant 1 of a nuclear power-generating station, main steam 3 generated in a steam generator 2 performs work in a high pressure turbine 4, and then turns into wet steam 5 and flows out of the high pressure turbine 4, and then the wet steam 5 enters a moisture separator heater 20. The wet steam 5 has moisture separated and removed by the moisture separator heater 20, and turns into heated steam 6 having an increased temperature and flows into a low pressure turbine 7 from the inlet to perform work in the low pressure turbine 7, turns into water in a condenser 8, and then is fed to the steam generator 2 via a feed-water heater 10 by means of a pump 9.

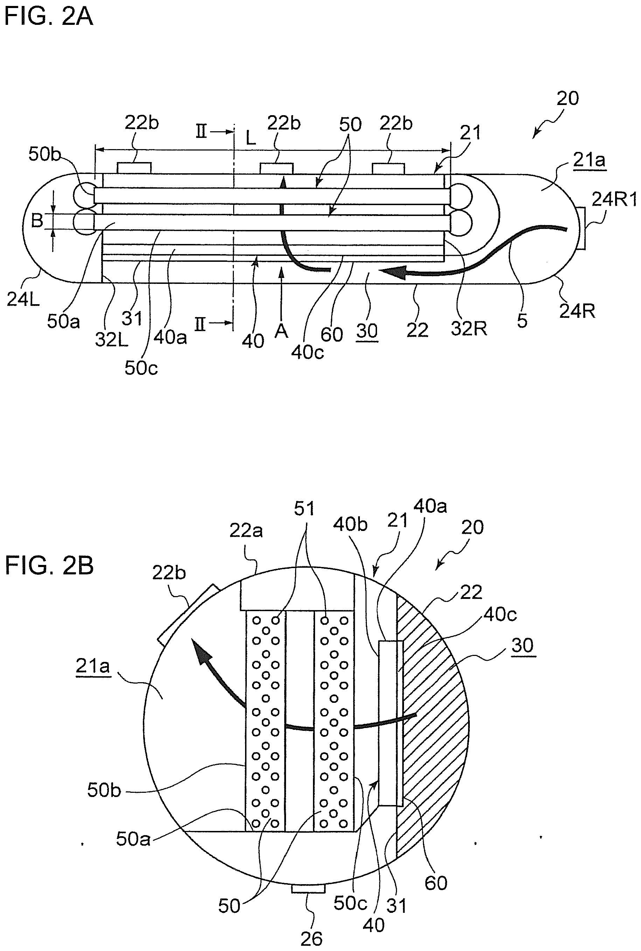

The moisture separator heater 20 installed in the power generating plant 1 of the nuclear power-generating station includes, as illustrated in FIG. 2(a) (plan view diagram of internal construction): a casing 21 having a tubular shape, extending in a horizontal direction and having both end portions closed; a manifold chamber 30 provided in the casing 21 and configured so that steam flows in an axial direction of the casing 21; a separator 40 provided in the casing 21 and in a longitudinal direction of the casing 21 along the manifold chamber 30 and configured to remove moisture in the steam; and a heating tube bundle 50 provided in the casing 21 and on a downstream side of the steam flowing out of the separator 40.

In some embodiments, as illustrated in FIG. 2(a) and FIG. 2(b), the casing 21 includes a body part 22 having a cylindrical form and extending in the horizontal direction, and a pair of a left side plate part 24L and a right side plate part 24R which are connected to the opposite end portions, in the axial direction, of the body part 22. Both end portions of the body part 22 are closed with the left side plate part 24L and the right side plate part 24R connected to the opposite end portions, in the axial direction, of the body part 22, whereby a space 21a in the casing 21 is gas-tightly sealed. The body part 22 is provided with a plurality of (three in this embodiment) outlets 22b disposed on an upper side of a lateral wall 22a at prescribed intervals in the axial direction of the body part 22 for discharging steam.

The left side plate part 24L and the right side plate part 24R each have a hollow hemispherical shell form, and each of the side plate parts is connected to the body part 22 so that the top portion side faces outward in the axial direction of the casing 21. The right side plate part 24R is provided with an inlet 24R1 on the top portion for permitting steam to flow in.

In some embodiments, the manifold chamber 30 extends from one end to the other end of the casing 21 in the axial direction in the space 21a at the front side of the body part 22. The manifold chamber 30 includes the lateral wall 22a constituting a front side portion of the body part 22, a partition plate 31 provided in the body part 22, and a pair of a left end plate 32L and a right end plate 32R provided on the opposite ends in the axial direction of the body part 22.

The partition plate 31, having a rectangular shape in a lateral view, is disposed on the front side in the body part 22, and extends from one end to the other end of the body part 22 in the longitudinal direction and extends in the vertical direction such that both end portions in the up-and-down direction are fixed on the inner surface of the body part 22. The left end plate 32L and the right end plate 32R, each having a semicircular shape in a lateral view, are connected to the inner surface of the lateral wall 22a at one end portion and the other end portion of the body part 22, respectively, and extend inward in the radial direction of the casing 21. The other end portion of the manifold chamber 30 is closed with the left end plate 32L. Further, the right end plate 32R has an opening portion formed, and is in communication with the space 21a in the right side plate part 24R and with the inlet 24R1 via the opening portion.

The partition plate 31 defining the manifold chamber 30 is provided with a plurality of slits at prescribed intervals in the axial direction of the casing 21. The steam having flowed into the manifold chamber 30 thereby flows out through the slits to the separator 40 side.

In some embodiments, the separator 40 is disposed along the partition plate 31 of the manifold chamber 30, and is provided over the overall length in the axial direction (longitudinal direction) of the body part 22. The separator 40 separates and removes moisture when the steam passes therethrough. The separator 40 may be one that separates moisture in the steam utilizing the inertia, for example. The separator 40 is in the form of a plate and has a polygonal shape, a rectangular shape in the embodiment illustrated in the drawings, extending along the axial direction of the body part 22 in a lateral view. The separator 40 is fixed and held in the body part 22 in a state such that a longitudinal edge 40a of the separator 40 extends along the partition plate 31 of the manifold chamber 30 and a transverse edge 40b of the separator 40 extends in the vertical direction.

The steam having moisture removed by the separator 40 flows out of the separator 40. The separated moisture is discharged outside via a drain 26 provided in a bottom portion of the body part 22.

In some embodiments, the heating tube bundle 50 includes heating tubes 51. A heating medium as a heat source flows in the heating tubes 51, and steam to be heated, i.e. the steam having moisture removed by the separator 40, flows outside the heating tubes 51. The steam is subjected to heat exchange on the heating tubes 51 to have an increased temperature, and then is discharged from the outlet 22b. The heating tube bundle 50 has the heating tubes 51 which extend in the axial direction of the casing 21 and which are divided into a plurality of stages at different levels in the up-and-down direction. The heating tubes 51 are arranged to form a staggered arrangement with respect to a direction (hereinafter referred to as "width direction") perpendicular to the axial direction of the casing 21.

The width B (see FIG. 2(a)) of the heating tube bundle 50 is at most 115 of the length L of the heating tube bundle 50 in the axial direction of the casing 21. Accordingly, the width B of the heating tube bundle 50 is small relative to the length L in the axial direction.

As described above, since the heating tube bundle 50 has a small width relative to the length in the axial direction of the casing 21, the heating tube bundle 50 has a rectangular shape in the form of a plate. Further, a longitudinal edge 50a of the heating tube bundle 50, extending in the axial direction of the casing 21, extends along the separator 40 over the overall length of the body part 22 in the longitudinal direction, and a transverse edge 50b of the heating tube bundle 50, extending in the width direction of the casing 21, extends in the vertical direction, and the heating tube bundle 50 is fixed and held in the body part 22. Accordingly, the separator 40 is disposed along a lateral face 50c of the heating tube bundle 50 on one side in the transverse direction. Since the heating tube bundle 50 is such that, as described above, the longitudinal edge 50a extends over the overall length of the body part 22 in the longitudinal direction, it is possible to obtain a larger contact area for the steam passing through the heating tube bundle 50, and thereby to effectively perform heat exchange of the steam with the heating tubes 51.

As described above, with the moisture separator heater 20 according to some embodiments, as illustrated in FIG. 1, FIG. 2(a) and FIG. 2(b), the wet steam 5 (having a temperature of e.g. 350°C) having performed work in the high pressure turbine 4 flows into the inlet 24R1 of the moisture separator heater 20, and then flows through the space 21a in the casing 21 and flows into the manifold chamber 30. The wet steam 5 having entered the manifold chamber 30 flows along the axial direction of the casing 21 and flows out through the slits of the manifold chamber 30 to the separator 40 side.

The wet steam 5 having flowed out to the separator 40 side has the moisture removed when passing through the separator 40 and then flows out of the separator 40 to the heating tube bundle 50 side. The steam having the moisture removed is heated when passing through the heating tube bundle 50 to have an increased temperature, and then is discharged from the outlet 22b. The heated steam is fed to the low pressure turbine 7.

The heating tube bundle 50 of the moisture separator heater 20 has a polygonal shape, a rectangular shape in the embodiment illustrated in the drawings, extending along the axial direction of the body part 22 in a lateral view; and in the casing 21 extending in the horizontal direction, the heating tube bundle 50 is provided such that the longitudinal edge 50a of the heating tube bundle 50 extends along the axial direction of the casing 21 and the transverse edge 50b of the heating tube bundle 50 extends in the vertical direction. Further, the width of the heating tube bundle 50 is small relative to the length in the axial direction. Accordingly, it is thereby possible to reduce the pressure loss to a large extent when the steam passes through the heating tube bundle 50.

Further, since the heating tube bundle 50 and the separator 40 extend in the axial direction of the casing 21 and stand in the vertical direction, and the manifold chamber 30 is disposed on one side of the casing 21 in the width direction of the body part 22, it becomes unnecessary to employ a casing having a larger diameter. Accordingly, it is possible to provide a moisture separator heater 20 capable of reducing the pressure loss of the steam flowing in the heating tube bundle 50 with the casing 21 placed horizontally without increasing the size of the body part 22.

Further, since the casing 21 accommodating the heating tube bundle 50 and the separator 40 extends in the horizontal direction, it is possible to set the position of the center of gravity of the moisture separator heater 20 at a low position. Accordingly, it is possible to stabilize the moisture separator heater 20 in an installed state, and thereby to reduce the possibility of being damaged in the event of an earthquake.

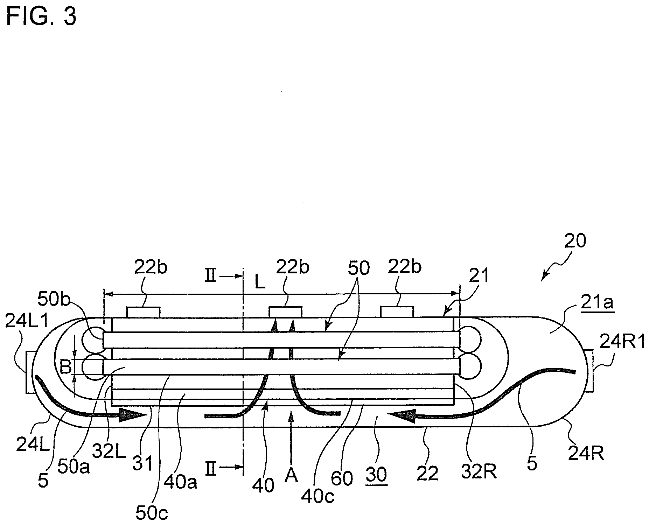

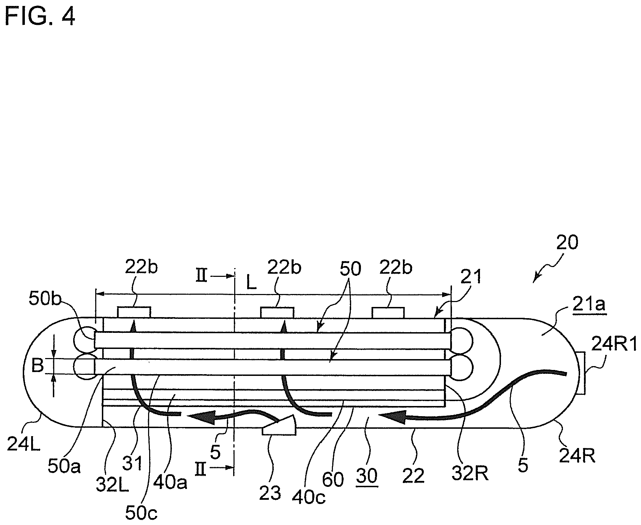

In the above-described embodiment, the inlet 24R1 to permit the wet steam to flow into the casing 21 is provided in one end portion of the casing 21 in the longitudinal direction. However, the position of the inlet 24R1 is not limited to one end portion of the casing 21 in the longitudinal direction, and the inlet(s) 24R1 may be provided in the other end portion in the longitudinal direction, at both sides in the longitudinal direction (see FIG. 3), or in a central portion in the longitudinal direction (see FIG. 4). In a case where the inlets are provided on both sides of the casing 21 in the longitudinal direction, an inlet 24L1 is, as illustrated in FIG. 3, provided in the other end portion of the casing 21 in the longitudinal direction. Such a moisture separator heater has the same structure as illustrated in FIG. 2(a) except for what is described above, and the description thereof will be omitted. In a case where the inlet is provided in the central portion of the casing 21 in the longitudinal direction, an inlet 23 is provided, as illustrated in FIG. 4, at a position in a central portion of the casing 21 in the longitudinal direction where the inlet 23 is in communication with the manifold chamber 30. Such a moisture separator heater has the same structure as illustrated in FIG. 2(a) except for what is described above, and the description thereof will be omitted.

Now, illustrative embodiments are described with reference to FIG. 2(a), FIG. 2(b), FIG. 3, FIG. 4, and FIG. 5. In the illustrative embodiment shown in FIG. 3, an inflow regulating part 60 is provided on a surface, of the separator 40, facing to the manifold chamber 30 side.

The steam fed to the separator 40 is supplied from the manifold chamber 30 as illustrated in FIG. 2(a). In this regard, the manifold chamber 30 extends in the axial direction (longitudinal direction) of the casing 21. Thus, there is a distribution of static pressure in the manifold chamber 30 in the longitudinal direction, and the distribution of static pressure is such that the static pressure becomes higher toward the back side in the longitudinal direction of the manifold chamber 30 than the front side. Accordingly, it is required to make the flow rate of the steam fed into the separator 40 uniform. For this reason, the inflow regulating part 60 is provided along the surface, of the separator 40, facing to the manifold chamber 30.

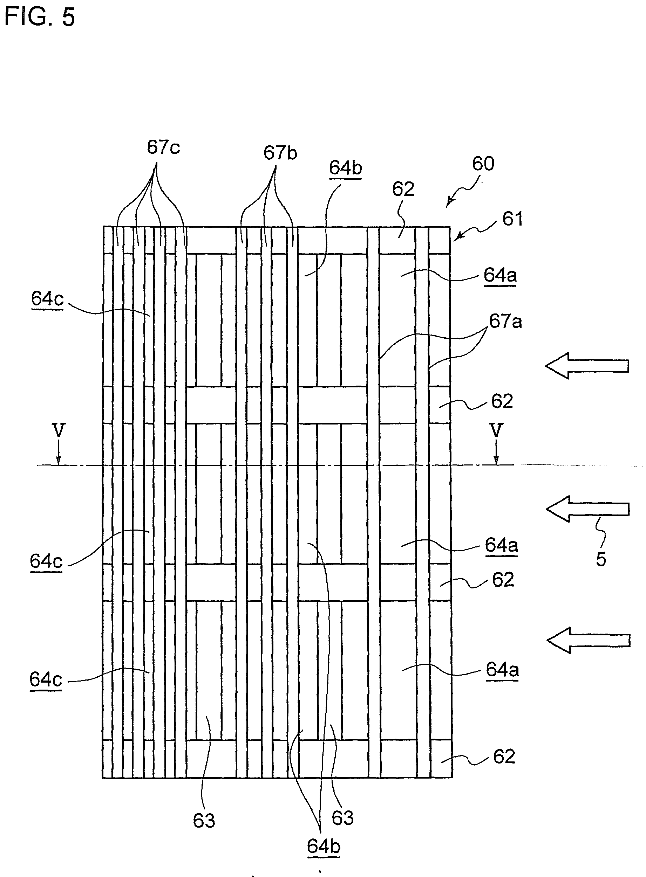

The inflow regulating part 60 includes, as illustrated in FIG. 5 (front view), a frame part 61 having a grid-like shape, and inflow regulating members 67a, 67b, 67c mounted to the frame part 61. The frame part 61 is held so as to face to a surface 40c, of the separator 40, facing to the manifold chamber 30 side. The frame part 61 includes a plurality of (four in this embodiment) transverse members 62 disposed in stages in the up-and-down direction and extending in the horizontal direction and a plurality of (six in this embodiment) longitudinal members 63 extending so as to connect between the plurality of transverse members 62 in the up-and-down direction and arranged at prescribed intervals in the width direction.

The plurality of transverse members 62 have the same length and are disposed in the same plane. The plurality of longitudinal members 63 are disposed in an intermediate portion of the transverse members 62 in the longitudinal direction at prescribed intervals. The plurality of longitudinal members 63 are disposed in the same plane as the plurality of the transverse members 62, and are integrally connected to the transverse members 62 at the intersecting portions. The transverse members 62 and the longitudinal members 63 together form a plurality of opening portions 64a, 64b, 64c having substantially the same opening area. In this embodiment, nine opening portions 64a, 64b, 64c are formed in a grid manner.

On the three opening portions 64a disposed at relatively upper, middle and lower positions and disposed on the upstream side of the wet steam 5 flowing in the manifold chamber 30, a plurality of (two in this embodiment) inflow regulating members 67a are provided, extending in the up-and-down direction so as to cover a part of the opening portions 64a. On the three opening portions 64b disposed at relatively upper, middle and lower positions and disposed on the central portion side of the inflow regulating part 60, a plurality of (three in this embodiment) inflow regulating members 67b are provided, extending in the up-and-down direction so as to cover a part of the opening portions 64b. Further, on the three opening portions 64c disposed at relatively upper, middle and lower positions and disposed on the downstream side of the wet steam 5 flowing in the manifold chamber 30, a plurality of (four in this embodiment) inflow regulating members 67c are provided, extending in the up-and-down direction so as to cover a part of the opening portions 64c. The inflow regulating members 67a, 67b and 67c are connected to the transverse members 62 at the intersecting portions.

The installation intervals in the width direction between the inflow regulating members 67b disposed on the central portion side of the inflow regulating part 60 are narrower than the installation intervals in the width direction between the inflow regulating members 67a disposed on the upstream side of the wet steam 5 flowing in the manifold chamber 30. Further, the installation intervals between the inflow regulating members 67c disposed on the downstream side of the wet steam 5 flowing in the manifold chamber 30 are narrower than the installation intervals between the inflow regulating members 67b disposed on the central portion side of the inflow regulating part 60. Accordingly, the opening areas of the opening portions 64a, 64b, 64c become smaller from the upstream side toward the downstream side of the steam flowing in the manifold chamber 30.

Thus, even if there is a distribution such that the static pressure of the wet steam 5 fed from the manifold chamber 30 to the separator 40 side is higher on the back side of the manifold chamber 30 in the longitudinal direction, it is possible to feed the steam to the separator 40 at a uniform flow rate.

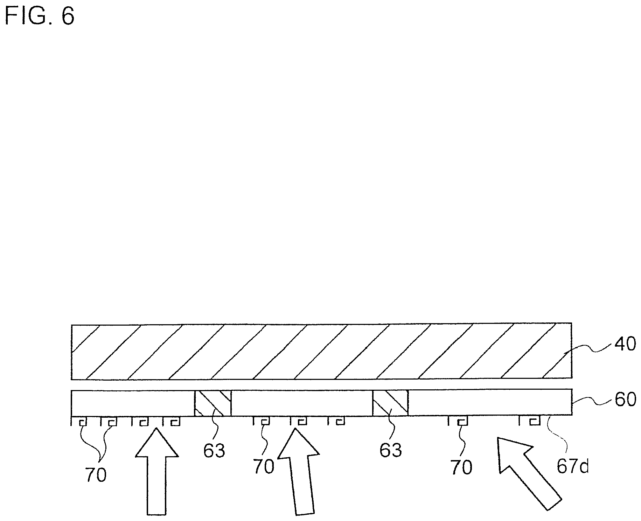

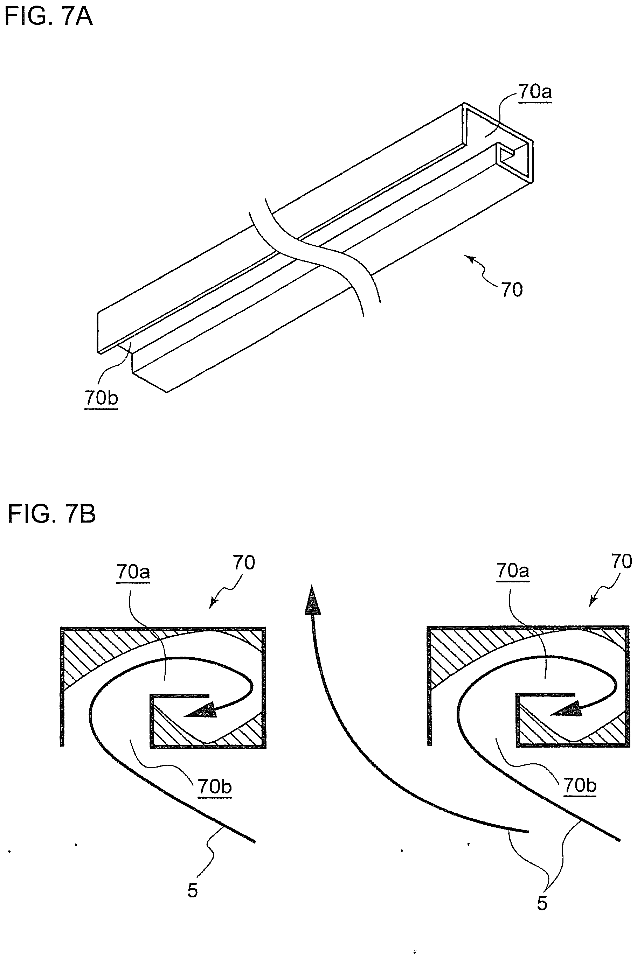

Now, illustrative embodiments shown in FIG. 6 (cross-sectional view), FIG. 7(a) (perspective view) and FIG. 7(b) (explanatory diagram) will be described. In the embodiment illustrated in FIG. 6, moisture removing parts 70 are provided on a surface 67d of the inflow regulating part 60 on the opposite side to the separator 40. The moisture removing parts 70 are provided along the longitudinal directions of the inflow regulating members 67a, 67b, 67c. As shown in FIG. 7(a) (perspective view), the moisture removing parts 70 each have a moisture removing passage 70a having a spiral shape formed by folding e.g. a metal sheet several times. The moisture removing passage 70a has an opening portion 70b having a rectangular shape on a face on one side of the moisture removing part 70 in the transverse direction.

As illustrated in FIG. 7(b) (explanatory diagram), when the moisture removing part 70 is fed with the wet steam 5 from the manifold chamber 30 (see FIG. 2(a)), a part of the wet steam 5 flows between the moisture removing parts 70 and is fed to the separator 40 (see

FIG. 2(a)). The rest of the wet steam 5 flows through the opening portion 70b of the moisture removing part 70 into the moisture removing passage 70a having a spiral shape. When the wet steam 5 flows into the moisture removing passage 70a from the opening portion 70b, centrifugal force acts particularly in the folded portion of the moisture removing part 70, and moisture of the wet steam 5 is trapped. Accordingly, it is possible to remove moisture of the wet steam 5, and thereby to reduce a burden on the separator 40 of work of removing moisture. The steam having flowed into the moisture removing part 70 and having the moisture removed is discharged from the openings in both end portions in the longitudinal direction of the moisture removing part 70.

Embodiments of the present invention have been described above, but the present invention is not limited thereto, and various modifications may be made without departing from the object of the invention as defined by the claims. For example, the embodiments described above may suitably be combined with each other.

### Reference Signs List

- 1: Power generating plant
- 2: Steam generator
- 3: Main steam
- 4: High pressure turbine
- 5: Wet steam
- 6: Steam
- 7: Low pressure turbine
- 8: Condenser
- 9: Pump
- 10: Feed-water heater
- 20: Moisture separator heater
- 21: Casing
- 21a, 70a: Space
- 22: Body part
- 22a: Lateral wall
- 24L: Left side plate part
- 24R: Right side plate part
- 24R1: Inlet
- 26: Drain
- 30: Manifold chamber
- 31: Partition plate
- 32L: Left end plate
- 32R: Right end plate
- 40: Separator
- 40a, 50a: Longitudinal edge
- 40b, 50b: Transverse edge
- 40c: Facing surface
- 50: Heating tube bundle
- 51: Heating tube
- 60: Inflow regulating part
- 61: Frame part
- 62: Transverse member
- 63: Longitudinal member
- 64: Opening portion
- 67a, 67b, 67c: Inflow regulating member
- 67d: Surface
- 70: Moisture removing part
- 70a: Moisture removing passage
- 70b: Opening portion

## Claims

1. A moisture separator heater (20) comprising:
a casing (21) having a tubular shape, extending in a horizontal direction and having both end portions closed;
a manifold chamber (30) provided in the casing (21) and configured so that steam flows in an axial direction of the casing (21);
a separator (40) provided in the casing (21) and in a longitudinal direction of the casing (21) along the manifold chamber (30) and configured to remove moisture in the steam;
**characterized in that**
the casing (21) includes a body part (22) having a cylindrical form and extending in the horizontal direction,
the manifold chamber (30) includes a partition plate (31) provided in the body part (22),
the manifold chamber (30) is disposed on one side of the casing in a width direction of the body part (22),
the partition plate (31), having a rectangular shape in a lateral view, extends from one end to the other end of the body part (22) in the longitudinal direction and extends in a vertical direction such that both end portions in the up-and-down direction are fixed on an inner surface of the body part (22),
the partition plate (31) is provided with a plurality of slits at prescribed intervals in the axial direction of the casing (21),
the separator (40) extends in the axial direction of the casing (21) and stands in the vertical direction,
a heating tube bundle (50) is provided in the casing (21) and arranged in plates on a downstream side of the steam flowing out of the separator (40), the heating tube bundle (50) extending in the axial direction of the casing (21) and standing in the vertical direction,
the heating tube bundle (50) has a rectangular shape in a lateral view and has a longitudinal edge (50a) extending along the axial direction of the casing (21) and a transverse edge (50b) extending in the vertical direction,
the separator (40) is formed in a plate-like shape having a rectangular shape in a lateral view,
the separator (40) is arranged so that a longitudinal edge (40a) of the plate-like shape extends along the axial direction and a transverse edge (40b) of the plate-like shape extends along the vertical direction, and
the heating tube bundle (50) is arranged along the plate like shape of the separator (40) to extend in the axial direction and in the vertical direction.

2. The moisture separator heater (20) according to claim 1, wherein the separator (40) includes an inflow regulating part (60) which covers a part of a lateral surface of the separator (40) on a side into which the steam flows and which is configured to regulate an inflow amount of the steam into the separator (40).

3. The moisture separator heater (20) according to claim 2,
wherein the inflow regulating part (60) includes a plurality of inflow regulating members (67a, 67b, 67c) extending in the up-and-down direction and covering the lateral surface of the separator (40), and a frame part (61) to support the plurality of inflow regulating members (67a, 67b, 67c), and
wherein the plurality of inflow regulating members (67a, 67b, 67c) are arranged such that an interval between two adjacent inflow regulating members (67a, 67b, 67c) decreases from an upstream side toward a downstream side of the steam flowing along the axial direction of the casing (21).

## Patentansprüche

1. Feuchtigkeitsabscheidererhitzer (20), der Folgendes umfasst:
ein Gehäuse (21) mit einer Rohrform, das sich in eine horizontale Richtung erstreckt und deren Endabschnitte beide geschlossen sind;
eine Verteilerkammer (30), die im Gehäuse (21) bereitgestellt und derart ausgelegt ist, dass Dampf in eine Axialrichtung des Gehäuses (21) strömt;
ein Abscheider (40), der im Gehäuse (21) und in einer Längsrichtung des Gehäuses (21) entlang der Verteilerkammer (30) bereitgestellt und dazu ausgelegt ist, Feuchtigkeit aus dem Dampf zu entfernen;
**dadurch gekennzeichnet, dass**
das Gehäuse (21) ein Körperteil (22) mit einer zylindrischen Ausformung beinhaltet, das sich in die horizontale Richtung erstreckt,
die Verteilerkammer (30) eine Trennplatte (31) beinhaltet, die im Körperteil (22) bereitgestellt ist,
die Verteilerkammer (30) in einer Breitenrichtung des Körperteils (22) auf einer Seite des Gehäuses angeordnet ist,
die Trennplatte (31), die in einer Seitenansicht eine Rechteckform aufweist, sich in die Längsrichtung von einem Ende zum anderen Ende des Körperteils (22) erstreckt und sich in eine vertikale Richtung erstreckt, derart, dass beide Endabschnitte in der Auf-AbRichtung auf einer Innenfläche des Körperteils (22) befestigt sind,
die Trennplatte (31) in vorgeschriebenen Intervallen in der Axialrichtung des Gehäuses (21) mit einer Vielzahl von Schlitzen versehen ist,
der Abscheider (40) sich in die Axialrichtung des Gehäuses (21) erstreckt und in der vertikalen Richtung steht,
ein Heizrohrbündel (50) im Gehäuse (21) bereitgestellt und auf einer Stromabwärtsseite des Dampfes, der aus dem Abscheider (40) strömt, in Platten arrangiert ist, wobei sich das Heizrohrbündel (50) in die Axialrichtung des Gehäuses (21) erstreckt und in der vertikalen Richtung steht,
das Heizrohrbündel (50) in einer Seitenansicht eine Rechteckform aufweist sowie eine Längskante (50a), die sich entlang der Axialrichtung des Gehäuses (21) erstreckt, und eine Querkante (50b), die sich in die vertikale Richtung erstreckt, aufweist,
der Abscheider (40) zu einer plattenartigen Form gebildet ist, die in einer Seitenansicht eine Rechteckform aufweist,
der Abscheider (40) derart arrangiert ist, dass sich eine Längskante (40a) der plattenartigen Form entlang der Axialrichtung erstreckt, und sich eine Querkante (40b) der plattenartigen Form entlang der vertikalen Richtung erstreckt, und
das Heizrohrbündel (50) entlang der plattenartigen Form des Abscheiders (40) arrangiert ist, um sich in die Axialrichtung und in die vertikale Richtung zu erstrecken.

2. Feuchtigkeitsabscheidererhitzer (20) nach Anspruch 1, wobei der Abscheider (40) ein Einströmungsregulierteil (60) beinhaltet, das auf einer Seite, in die in der Dampf strömt, einen Teil einer Seitenfläche des Abscheiders (40) abdeckt, und das dazu ausgelegt ist, eine Einströmungsmenge des Dampfes in den Abscheider (40) zu regeln.

3. Feuchtigkeitsabscheidererhitzer (20) nach Anspruch 2,
wobei das Einströmungsregulierteil (60) eine Vielzahl von Einströmungsregulierelementen (67a, 67b, 67c), die sich in die Auf-AbRichtung erstrecken und die Seitenfläche des Abscheiders (40) abdecken, und ein Rahmenteil (61) zum Stützen der Vielzahl von Einströmungsregulierelementen (67a, 67b, 67c) beinhaltet, und
wobei die Vielzahl von Einströmungsregulierelementen (67a, 67b, 67c) derart arrangiert sind, dass ein Intervall zwischen zwei benachbarten Einströmungsregulierelementen (67a, 67b, 67c) von einer Stromaufwärtsseite zu einer Stromabwärtsseite des Dampfes, der entlang der Axialrichtung des Gehäuses (21) strömt, abnimmt.

## Revendications

1. Élément chauffant séparateur d'humidité (20) comprenant :
un boîtier (21) ayant une forme tubulaire, s'étendant dans une direction horizontale et ayant deux parties d'extrémité fermées ;
une chambre de collecteur (30) prévue dans le boîtier (21) et configurée de sorte que la vapeur s'écoule dans une direction axiale du boîtier (21) ;
un séparateur (40) prévu dans le boîtier (21) et dans une direction longitudinale du boîtier (21) le long de la chambre de collecteur (30) et configuré pour retirer l'humidité dans la vapeur ;
**caractérisé en ce que** :
le boîtier (21) comprend une partie de corps (22) ayant une forme cylindrique et s'étendant dans la direction horizontale,
la chambre de collecteur (30) comprend une plaque de séparation (31) prévue dans la partie de corps (22),
la chambre de collecteur (30) est disposée sur un côté du boîtier dans une direction de largeur de la partie de corps (22),
la plaque de séparation (31) ayant une forme rectangulaire sur une vue latérale, s'étend à partir d'une extrémité à l'autre extrémité de la partie de corps (22) dans la direction longitudinale et s'étend dans une direction verticale de sorte que les deux parties d'extrémité dans la direction de haut en bas sont fixées sur une surface interne de la partie de corps (22),
la plaque de séparation (31) est prévue avec une pluralité de fentes à des intervalles prescrits dans la direction axiale du boîtier (21),
le séparateur (40) s'étend dans la direction axiale du boîtier (21) et se tient dans la direction verticale,
un faisceau de tubes de chauffage (50) est prévu dans le boîtier (21) et agencé dans des plaques sur un côté en aval de la vapeur sortant du séparateur (40), le faisceau de tubes de chauffage (50) s'étendant dans la direction axiale du boîtier (21) et se tenant dans la direction verticale,
le faisceau de tubes de chauffage (50) a une forme rectangulaire sur une vue latérale et a un bord longitudinal (50a) s'étendant le long de la direction axiale du boîtier (21) et un bord transversal (50b) s'étendant dans la direction verticale,
le séparateur (40) est formé selon une forme de plaque ayant une forme rectangulaire sur une vue latérale,
le séparateur (40) est agencé de sorte qu'un bord longitudinal (40a) de la forme de plaque s'étend le long de la direction axiale et un bord transversal (40b) de la forme de plaque s'étend le long de la direction verticale, et
le faisceau de tubes de chauffage (50) est agencé le long de la forme de plaque du séparateur (40) pour s'étendre dans la direction axiale et dans la direction verticale.

2. Élément chauffant séparateur d'humidité (20) selon la revendication 1, dans lequel le séparateur (40) comprend une partie de régulation d'entrée (60) qui recouvre une partie d'une surface latérale du séparateur (40) sur un côté dans lequel la vapeur s'écoule et qui est configurée pour réguler une quantité d'entrée de la vapeur dans le séparateur (40).

3. Élément chauffant séparateur d'humidité (20) selon la revendication 2,
dans lequel la partie de régulation d'entrée (60) comprend une pluralité d'éléments de régulation d'entrée (67a, 67b, 67c) s'étendant dans la direction de haut en bas et recouvrant la surface latérale du séparateur (40) et une partie de bâti (61) pour supporter la pluralité d'éléments de régulation d'entrée (67a, 67b, 67c), et
dans lequel la pluralité d'éléments de régulation d'entrée (67a, 67b, 67c) sont agencés de sorte qu'un intervalle entre deux éléments de régulation d'entrée (67a, 67b, 67c) adjacents diminue d'un côté en amont vers un côté en aval de la vapeur s'écoulant le long de la direction axiale du boîtier (21).
